Europäisches Patentamt

European Patent Office

Office européen des brevets

(11) Veröffentlichungsnummer: **0 472 024 A2**

## EUROPÄISCHE PATENTANMELDUNG

(21) Anmeldenummer: **91112964.1**

(22) Anmeldetag: **01.08.91**

(51) Int. Cl.5: **G01S 13/28**

(30) Priorität: **24.08.90 DE 4026854**

(43) Veröffentlichungstag der Anmeldung:
**26.02.92 Patentblatt 92/09**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Schumacher, Friedrich, Dr.-Ing.**
**Fertigstrasse 9a**
**W-8000 München 71(DE)**
Erfinder: **Heinz, Helmut, Dipl.-Ing.**
**Moosmühle 12**
**W-8051 Massenhausen(DE)**

(54) **Pulsradarsystem.**

(57) Sendeseitig wird in der Zwischenfrequenzträgerebene digital eine Pulsexpansion ausgeführt, wobei in einem Festwertspeicher (14) die Abtastwerte der modulierten Trägerfrequenz abgespeichert sind und ein Digital/Analog-Wandler (15) das Zwischenfrequenz-Signal direkt ohne Frequenzumsetzung erzeugt. Empfangsseitig wird in der Zwischenfrequenzträgerebene das über einen einzigen Analog/Digital-Wandler (31) umgeformte Empfangssignal mittels eines reellen Korrelators (32) digital pulskomprimiert und dann nach digitaler Mischung in zwei digitalen Mischstufen (34, 35), d.h. einer sogenannten Quadraturdemodulation, in Form von I- und Q-Kanal-Signalen ausgewertet. Die Erfindung läßt sich bei digital verarbeitenden Pulsradarsystemen aller Art verwenden.

# FIG 4

Die Erfindung bezieht sich auf ein Pulsradarsystem gemäß dem Oberbegriff des Patentanspruchs 1.

Pulskompressionstechniken werden seit vielen Jahren bei Pulsradarsystemen eingesetzt, um die Auflösung bzw. die Sendeleistung der Radargeräte zu erhöhen. Durch die Pulskompressionstechnik ist es auch möglich, Radarsysteme zu erstellen, die bei gleichbleibender Reichweite geringere Sendespitzenleistungen benötigen. Bei gepulsten Radarsystemen läßt sich die Empfindlichkeit oder die Reichweite steigern, indem man durch Verlängern der Sendeimpulse die verfügbare Energie pro Impuls erhöht. Darunter leidet allerdings die Distanzauflösung, die ein wichtiger Radarparameter ist. Die Distanzauflösung hängt direkt mit der Bandbreite des Radarpulses zusammen. Pulskompressionssystemen liegt die Idee zugrunde, lange, modulierte Impulse auszusenden, wobei das Pulsspektrum jedoch die Bandbreite eines Signalzuges mit kurzen Impulsen hat.

In üblicher Weise erfolgt heute die Signalverarbeitung analog und zwar unter Anwendung von Oberflächenwellenfiltern (SAW-Filter). Hierbei benötigt man für jedes Kompressionsverhältnis einen eigenen Zweig. Außerdem ist der erreichbare Nebenzipfelabstand bei den auf der Empfangsseite komprimierten Impulsen wegen der Toleranzen der akustischen Oberwellenfilter begrenzt. Analoge Pulskompressionssysteme mit SAW-Filtern sind in dem Aufsatz A. Steffen: "SAW-Pulskompressionssysteme", in der Zeitschrift "Bulletin SEV/VSE Jahrgang 78, Heft 3, 7.2.1987, Seiten 131 bis 135 beschrieben. Auch in dem Buch von M.I. Skolnik: "Introduction to Radar Systems", Second Edition, McGraw-Hill International Book Company, 1981, S. 420 bsi 434 sind verschiedene Möglichkeiten der Pulskompression angegeben.

Unter anderem aus den vorstehend angegebenen Gründen ist man bestrebt, die Pulsexpansion bzw. Pulskompression soweit wie möglich digital zu realisieren. Auch aus dem bereits genannten Aufsatz von A.Steffen ist bereits ein Hinweis zu entnehmen, Pulskompressionssysteme in Betracht der rasanten Fortschritte in der Digitaltechnik ganz oder teilweise digital zu verwirklichen.

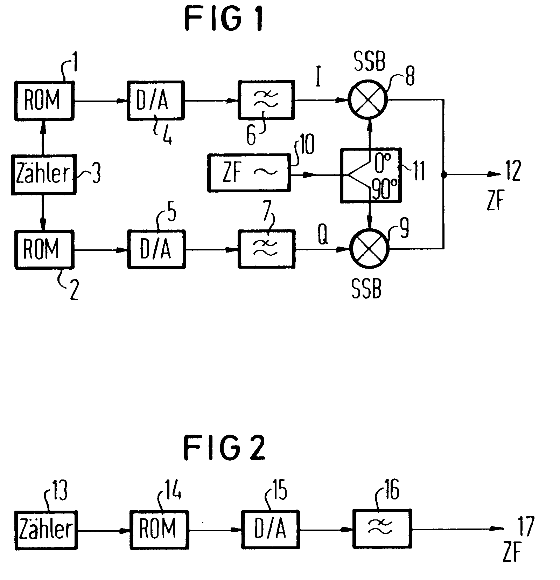

Die bisher verwendete Anordnung eines digitalen Pulsexpanders zeigt Figur 1. Das expandierte Signal, das einem Zf-Sendesignalausgang 12 zugeführt wird, wird in einem aus zwei Mischstufen 8 und 9 bestehenden Einseitenbandmischer erzeugt. Die Zf-Trägerfrequenz wird in einem Oszillator 7 erzeugt und der Mischstufe 8 ohne Phasenverschiebung und der Mischstufe 9 mit einer Phasenverschiebung von 90 Grad über eine Phasenstufe 11 zugeführt. Die I- und Q-Signale im In-Phase-Kanal I bzw. Quadraturkanal Q werden aus zwei Festwertspeichern (ROMs) 1 bzw. 2 ausgelesen, die von einem Zähler 3 versorgt werden, und in Digital/Analog-Wandlern 4 bzw. 5 umgesetzt. Zwischen dem Wandler 4 und dem I-Kanaleingang an der Mischstufe 8 ist noch ein Tiefpaß 6 zwischengeschaltet. In gleicher Weise liegt im Q-Kanal zwischen dem Wandler 5 und dem einen Eingang der Mischstufe 9 ein Tiefpaß 7. Die Basisbandsignale können bei dieser Anordnung beliebig genau erzeugt werden. Es bleibt aber der analoge, die beiden Mischstufen 8 und 9 aufweisende Einseitenbandmischer mit seinen Quadraturfehlern.

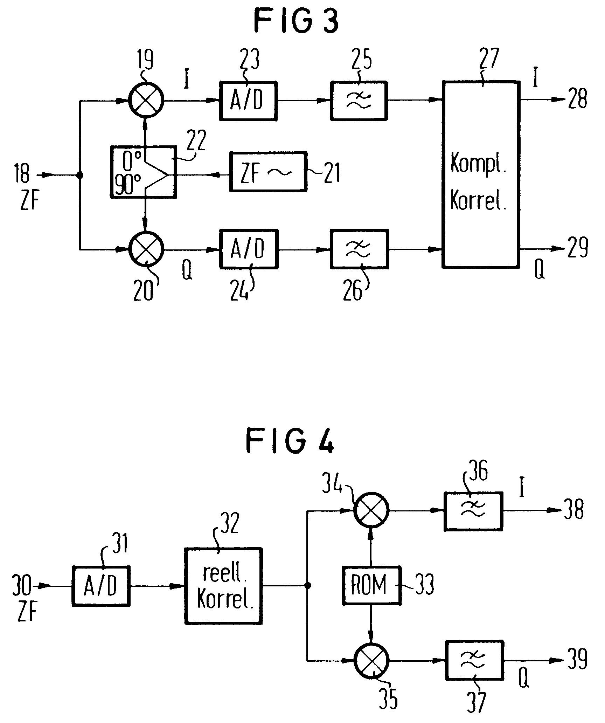

Die bisher verwendete Anordnung für einen digitalen Pulskompressor auf der Empfangsseite zeigt Figur 3. Das in der Zf-Trägerfrequenzebene an einem Eingang 18 ankommende Empfangssignal wird in zwei Mischstufen 19 und 20 analog demoduliert. Die Zf-Oszillatorfrequenz zur Herabmischung wird in einem Oszillator 21 erzeugt und der Mischstufe 19 ohne Phasenverschiebung und der Mischstufe 20 über ein Phasenglied 22 mit 90 Grad Phasenverschiebung zugeführt. Durch diese Art von Demodulation werden der in der digitalen Signalverarbeitung in der Pulsradartechnik übliche In-Phase-Kanal I und Quadraturkanal Q gebildet. Der Zweck des Quadraturkanals ist bekanntlich die Eliminierung des Effekts von sogenannten Blindphasen. Im Zusammenhang mit der digitalen Signalverarbeitung bei Pulsradarsystemen wird auf das bereits genannte Buch von M.I. Skolnik, S. 119 bis 121 hingewiesen. Die Signale im I-Kanal und Q-Kanal werden jeweils in einem Analog/Digital-Wandler 23 bzw. 24 in der Basisbandlage in Digitalsignale umgewandelt und über einen Tiefpaß 25 bzw. 26 einem komplexen Korrelator 27 zugeführt, von dem an den Ausgängen 28 und 29 das I- und das Q-Signal zur Auswertung abgenommen werden können. Das Hauptproblem bei der Realisierung des bekannten, z.T. digital arbeitenden Pulskompressors stellt der hohe Rechenaufwand im komplexen Korrelator 27 dar.

Aufgabe der Erfindung ist es, bei einem Pulsradarsystem mit digitaler Pulsexpansion und digitaler Pulskompression den Aufbau, insbesondere bezüglich des empfangsseitigen Korrelators, zu vereinfachen und dabei auch möglichst die Eigenschaften, insbesondere was eine Vermeidung von Quadraturfehlern auf der Sende- und Empfangsseite betrifft, zu verbessern.

Diese Aufgabe wird bei einer gattungsgemäßen Anordnung durch die im kennzeichnenden Teil des Patentanspruchs 1 angegebenen Merkmale gelöst. Der Schaltungsaufwand auf der Sendeseite ist beim Pulsradarsystem nach der Erfindung wesentlich geringer, da nur ein einziger Digital/Analog-Wandler auf der Sendeseite erforderlich ist. Quadraturfehler können nicht mehr auftreten, da kein Einseitenbandmischer vorhanden ist. Auf der Empfangsseite ist kein komplexer Korrelator mehr erforderlich, sondern nur noch ein wesentlich einfacher aufgebauter reeller Korrelator.

Zweckmäßige Weiterbildungen der Erfindung sind in den Unteransprüchen angegeben.

Die Erfindung wird im folgenden anhand von Figuren erläutert.

Es zeigen:

Fig. 1 den, bekannten bereits vorher beschriebenen sendeseitigen digitalen Pulsexpander in einem Schaltbild,

Fig. 2 das Schaltbild eines volldigitalen Pulsexpanders in einem Pulsradarsystem nach der Erfindung

Fig. 3 das Blockschaltbild des ebenfalls bereits beschriebenen, bekannten Pulskompressors,

Fig. 4 das Blockschaltbild eines volldigitalen Pulskompressors des Pulsradarsystems nach der Erfindung.

In Figur 2 ist ein voll digital arbeitender Pulsexpander eines Pulsradarsystems nach der Erfindung im Blockschaltbild dargestellt. In einem von einem Zähler 13 versorgten Festwertspeicher (ROM) 14 sind die Abtastwerte des modulierten Zf-Trägers abgespeichert. Ein Digital/Analog-Wandler 15 erzeugt das Zf-Signal daher direkt ohne Frequenzumsetzung. Abgenommen wird das analoge Zwischenfrequenz-Sendesignal über einen Tiefpaß 16 an einem Ausgang 17. Der Aufwand für den in Figur 2 dargestellten voll digitalen Pulsexpander ist wesentlich geringer als bei bekannten digitalen Pulsexpanderschaltungen, da lediglich ein Digital/Analog-Wandler 15 erforderlich ist. Auch ein Einseitenbandmischer entfällt, weshalb keine Quadraturfehler mehr auftreten können. Die Höhe der erzeugbaren Zwischenfrequenz hängt zwar von der zur Verfügung stehenden Abtastrate ab. Trägerfrequenzen bis ca. 20 MHz stellen heute aber keinerlei Problem mehr dar.

In Figur 4 ist ein voll digital arbeitender Pulskompressor eines Pulsradarsystems nach der Erfindung in Blockschaltbildform dargestellt. Das in der Zwischenfrequenzebene an einem Eingang 30 abgenommene Empfangssignal wird zuerst einem Analog/Digital-Wandler 31 zugeführt. Das digitalisierte Empfangssignal wird in der Zf-Ebene dann einem Korrelator 32 eingegeben. Der Korrelator 32 arbeitet somit nicht mehr im Basisband, sondern in der Trägerfrequenzebene. Da die Signale hier rein reell sind, wird kein komplexer Korrelator mehr benötigt. Ein reeller Korrelator ist wesentlich einfacher aufgebaut, da er pro Stufe nur einen Multiplizierer und einen Akkumulator benötigt. Das korrelierte Empfangssignal in der Zf-Ebene wird dann jeweils einem Eingang zweier digitaler Mischstufen 34 bzw. 35 zugeführt, deren zweiter Eingang jeweils von einem Festwertspeicher (ROM) 33 beaufschlagt wird. Die ins Basisband heruntergemischten Ausgangssignale der beiden Mischstufen 34 und 35 werden im I-Kanal über einen Tiefpaß 36 einem Ausgang 38 und im Q-Kanal über einen Tiefpaß 37 einem Ausgang 39 zugeführt. An den Ausgängen 38 und 39 stehen dann die I- und Q-Signale zur weitern Auswertung bereit.

Von Vorteil beim voll digital arbeitenden Pulskompressor nach Fig. 4 ist, daß nur ein Analog/Digital-Wandler 31 benötigt wird und daß wegen der digitalen Quadraturdemodulation die Quadraturfehler entfallen. Auch hier hängt zwar die verarbeitbare Trägerfrequenz von der Höhe der zur Verfügung stehenden Taktrate von Analog/Digital-Wandlern und Multiplizierern ab. Es lassen sich aber auch hier bereits Trägerfrequenzen bis ca. 10 MHz verarbeiten, die in Zukunft sicherlich erheblich höher liegen dürften.

**Patentansprüche**

1. Pulsradarsystem mit sendeseitig digital erzeugter Pulsexpansion, bei der der Signalverlauf der Sendeimpulse in einem Festwertspeicher punktweise abgespeichert und über einen Digital/Analog-Wandler ausgegeben wird, und mit empfangsseitig digital unter Verwendung eines Kompressionsfilters erzeugter Pulskompression, wobei nach einer Analog/Digital-Umwandlung und einer Korrelation des Empfangssignals mit der Kompressionsfilterantwort eine Auswertung der in einem In-Phase-Kanal (I-Kanal) und einem Quadratur-Kanal (Q-Kanal) vorliegenden Signale erfolgt, **dadurch gekennzeichnet,** daß auf der Sendeseite im Festwertspeicher (14) die Abtastwerte der modulierten Zf-Trägerfrequenz abgespeichert sind und der Digital/Analog-Wandler (15) das Zwischenfrequenzsignal direkt ohne Umsetzung erzeugt, daß auf der Empfangsseite im Anschluß an die schon in der Zf-Trägerfrequenzebene mittels eines einzigen Analog/Digital-Wandlers (31) durchgeführten Analog/Digital-Umwandlung die Korrelation ebenfalls in der Zf-Trägerfrequenzebene und zwar mittels eines reellen Korrelators (32) vorgenommen wird, und daß auf der Empfangsseite nach der Korrelation eine digitale Quadraturdemodulation mit Aufteilung der korrelierten Signale in den I-Kanal und den Q-Kanal mittels zweier von einem Festwertspeicher (33) beaufschlagter digitaler Mischstufen (34, 35) durchgeführt wird.

2. Pulsradarsystem nach Anspruch 1, **dadurch gekennzeichnet,** daß auf der Sendeseite in der Zf-Ebene im Anschluß an den Digital/Analog-Wandler (15) ein Tiefpaß (16) folgt.

3. Pulsradarsystem nach Anspruch 1,
   **dadurch gekennzeichnet**,
   daß auf der Empfangsseite an den Ausgängen der beiden digitalen Mischstufen (34, 35) jeweils ein Tiefpaß (36, 37) liegt und daß die von den beiden Tiefpässen ausgehenden Signale als I- bzw. Q-Kanal-Signale dann zur Auswertung herangezogen werden.

# F IG 1

# F IG 2

5

# FIG 3

# FIG 4